(19) Europäisches Patentamt
European Patent Office
Office européen des brevets

(11) **EP 1 995 627 A1**

(12) **EUROPEAN PATENT APPLICATION**

(43) Date of publication:
26.11.2008  Bulletin 2008/48

(51) Int Cl.:
*G02F 1/13357* (2006.01)       *G02B 5/02* (2006.01)
*G02F 1/1335* (2006.01)

(21) Application number: 08156653.1

(22) Date of filing: 21.05.2008

(84) Designated Contracting States:
AT BE BG CH CY CZ DE DK EE ES FI FR GB GR
HR HU IE IS IT LI LT LU LV MC MT NL NO PL PT
RO SE SI SK TR
Designated Extension States:
AL BA MK RS

(30) Priority: 21.05.2007  US 931132 P

(71) Applicant: **Rohm and Haas Denmark Finance A/S
2100 Copenhagen (DK)**

(72) Inventors:
• **Laney, Thomas M
Spencerport, NY 14559 (US)**

• **Aylward, Peter T
Hilton, NY 14468 (US)**
• **Rankin, Charles M., Jnr.
Penfield, NY 14526 (US)**

(74) Representative: **Buckley, Guy Julian
Rohm and Haas Europe Services ApS - UK
Branch
European Patent Department
4th Floor
22 Tudor Street
London
EC4Y 0AY (GB)**

(54) **Voided optical diffuser film with beads on a surface**

(57)     A voided semi-crystalline polymeric integrated optical diffuser film is provided with surface beads. The film is useful when incorporated into a display device such as an LC display.

Fig. 3

**Description**

**FIELD OF THE INVENTION**

The invention relates to optical displays, and more particularly to liquid crystal displays (LCDs) that may be used in LCD monitors and LCD televisions.

**BACKGROUND**

Liquid crystal displays (LCDs) are optical displays used in devices such as laptop computers, hand-held calculators, digital watches and televisions. Some LCDs include a light source that is located to the side of the display, with a light guide positioned to guide the light from the light source to the back of the LCD panel. Other LCDs, for example some LCD monitors and LCD televisions (LCD-TVs), are directly illuminated using a number of light sources positioned behind the LCD panel. This arrangement is increasingly common with larger displays, because the light power requirements, to achieve a certain level of display brightness, increase with the square of the display size, whereas the available real estate for locating light sources along the side of the display only increases linearly with display size. In addition, some LCD applications, such as LCD-TVs, require that the display be bright enough to be viewed from a greater distance than other applications, and the viewing angle requirements for LCD-TVs are generally different from those for LCD monitors and hand-held devices.

Some LCD monitors and most LCD-TVs are commonly illuminated from behind by a number of cold cathode fluorescent lamps (CCFLs). These light sources are linear and stretch across the full width of the display, with the result that the back of the display is illuminated by a series of bright stripes separated by darker regions. Such an illumination profile is not desirable, and so a diffuser plate is used to smooth the illumination profile at the back of the LCD device.

Currently, LCD-TV diffuser plates employ a polymeric matrix of polymethyl methacrylate (PMMA) with a variety of dispersed phases that include glass, polystyrene beads, and $CaCO_3$ particles. These plates often deform or warp after exposure to the elevated humidity and high temperature caused by the lamps. In addition, the diffusion plates require customized extrusion compounding to distribute the diffusing particles uniformly throughout the polymer matrix, which further increases costs.

A previous disclosure, U.S. Pat. Application No. 2006/0082699 describes one approach to reducing the cost of diffusion plates by laminating separate layers of a self-supporting substrate and an optically diffuse film. Although this solution is novel the need to use adhesives to laminate these layers together results in reduced efficiency of the system by adding light absorption materials. Also the additional processing cost to laminate the layers together is self-defeating. Also, this previous disclosure does not teach the materials and structure for an unattached diffuser film. It is desirable to have an unattached diffuser film, which must have dimensional stability as well as high optical transmission while maintaining a high level of light uniformization. Further, it is desirable for such a diffuser to have additional heat insulation value to reduce the heat gain from the light sources to the LC layer above the diffuser. Voiding is a well-known means to achieve both the optical requirements and the insulation requirements of the diffuser. A thin diffuser is also desirable as manufacturers are constantly looking for means to thin the profile of LCD screens. Producing a thin voided film that meets these requirements is very challenging as thin voided films are highly prone to shrinkage under elevated temperatures. Therefore, it the object of the present invention to provide a voided polymeric optical diffuser film with multifunctionality that includes surface collimating and or directional diffusion which can be placed adjacent to an optically transmissive self-supporting substrate, unattached to said substrate, to provide the optical smoothing function of previous plate diffusers at a very low cost. The optical diffuser film is unique in that it provides a high level of optical function and meets dimensional stability requirements under specified thermal testing even at low thicknesses.

**SUMMARY OF THE INVENTION**

One embodiment of this invention is a voided semi-crystalline polymeric integrated optical diffuser film provided with surface beads. The film is useful when incorporated into a display device such as an LC display.

Desirably it has a shrinkage of less than 1% as a result of thermal changes from 0-90C. This film is useful in replacing the optical function of diffuser plates and top diffuser typically used today in backlit LCD displays.

**BRIEF DESCRIPTION OF THE DRAWINGS**

The invention may be more completely understood in consideration of the following detailed description of various embodiments of the invention in connection with the accompanying drawings, in which:

FIG. 1 schematically illustrates a typical back-lit liquid crystal display device that uses a diffuser plate;

FIG. 2 schematically illustrates an arrangement of light management layers that is capable of using an optically transmissive self-supporting substrate and a voided polymeric optical diffuser film according to principles of the present invention;

FIG. 3 schematically illustrates an arrangement of light management layers that is capable of using an optically transmissive self-supporting substrate and a voided polymeric optical diffuser film with surface diffusion and or collimation properties the direction of light rays transmitted through the film according to principles of the present invention;

FIG. 4 schematically illustrates an embodiment of the invention employing an adhesive layer;

FIG 5 shows the test apparatus;

FIG 6 is a graph showing optical uniformity using the diffuser of the invention vs. without a diffuser plate or film.

While the invention is amenable to various modifications and alternative forms, specifics thereof have been shown by way of example in the drawings and will be described in detail. It should be understood, however, that the intention is not to limit the invention to the particular embodiments described. On the contrary, the intention is to cover all modifications, equivalents, and alternatives falling within the spirit and scope of the invention as defined by the claims.

## DETAILED DESCRIPTION

The present invention is applicable to liquid crystal displays (LCDs, or LC displays), and is particularly applicable to LCDs that are directly illuminated from behind, for example as are used in LCD monitors and LCD televisions (LCD-TVs).

An embodiment of the invention is directed to a liquid crystal display (LCD) unit that has a light source and an LCD panel that includes an upper plate, a lower plate and a liquid crystal layer disposed between the upper and lower plates. The lower plate faces the light source, and includes an absorbing polarizer. An arrangement of light management layers is disposed between the light source and the LCD panel so that the light source illuminates the LCD panel through the arrangement of light management layers. The arrangement of light management layers includes an arrangement of light management films and an optically transmissive self-supporting substrate. The arrangement of light management films comprises at least a first voided polymeric optical diffuser film with surface diffusion and or collimation properties. The arrangement of light management films optionally comprises other optical layers. Other optical layers may include a bead coated collimation film, a light directing film and a reflective polarizer.

Another embodiment of the invention is directed to a liquid crystal display (LCD) unit that has a light source and an LCD panel that includes an upper plate, a lower plate, and a liquid crystal layer disposed between the upper and lower plates. The lower plate faces the light source, and includes an absorbing polarizer. An arrangement of light management layers is disposed between the light source and the LCD panel so that the light source illuminates the LCD panel through the arrangement of light management layers. The arrangement of light management layers includes an arrangement of light management films and an optically transmissive self-supporting substrate. The arrangement of light management films comprises at least a first voided polymeric optical diffuser film with surface diffusion and or collimation properties and comprising a structured surface to control the direction of light rays transmitted through the film. The arrangement of light management films optionally comprises other optical layers. Other optical layers may include a light directing film and a reflective polarizer

The diffuser plates currently used in LCD-TVs are based on a polymeric matrix, for example polymethyl methacrylate (PMMA), polycarbonate (PC), or cyclo-olefins, formed as a rigid sheet. The sheet contains diffusing particles, for example, organic particles, inorganic particles or voids (bubbles). These plates often deform or warp after exposure to the elevated temperatures of the light sources used to illuminate the display. These plates also are more expensive to manufacture and to assemble in the final display device.

The invention is directed to a directly illuminated LCD device that has an arrangement of light management layers positioned between the LCD panel itself and the light source. The arrangement of light management layers includes an optically transmissive self-supporting organic or inorganic substrate and a voided polymeric optical diffuser film with surface diffusion and or collimation properties possessing a specific transmission and haze level placed directly adjacent to one side of the substrate, but unattached to said substrate. The transmission and haze levels of each component are designed to provide a direct-lit LC display whose brightness is relatively uniform across the display.

The optically transmissive self-supporting organic or inorganic substrate of the present invention are simple to manufacture and are commercially available as a commodity item. Voided polymeric optical diffuser films with surface diffusion and or collimation properties of the present invention are simple to manufacture and provide a high degree of flexibility in the materials and processes used in manufacturing. In the present invention, the structural and optical requirements are separated: the substrate provides the structural performance and the unattached diffusing layer, provides the optical performance. By separating these functions, the cost advantages of using common transparent materials and common diffuser sheets can be exploited, to reduce overall costs. By not attaching the substrate and the diffuser film a high level of optical performance and a low manufacturing cost is realized. This also permits the introduction of warp resistant plates, for example glass plates, at low cost. In addition, it is easier to control the diffusion properties more precisely when the diffuser is contained in a film rather than a substrate. By using a voided diffuser film a higher level of insulation can be provided at any given thickness of the diffuser. By being unattached, however, the diffuser must meet thermal shrinkage requirements of other optical films in the arrangement. The voided polymeric optical diffuser films with surface diffusion and or collimation properties may comprise a voided film as described herein with a surface coating of beads and a polymer binder (matrix). In one embodiment of this invention the beads are on at least one major surface of the voided diffuser film. In order to provide a collimation effect desired for use in LCD display, the preferred embodiment provides the beads on the surface furthest away from the light source. Such an arrangement provides a degree of pre-collimating of the diffuse light exiting the voided portion of the film. The beads useful in this invention are substantially transparent (light transmission greater than 70%). The beads may be glass, organic polymer or polymeric beads with an inorganic coating. The organic polymer beads useful in this invention may further comprise inorganic material(s) either within the bead or on the surface of the bead. The beads that populate the surface of the voided may have a size of range of between 1000-50,000 nm in their thickest dimension. In an embodiment the size range of the beads may be 8000 and 30,000 nm. and in yet another embodiment the size range may be between 1500 and 30,000 nm. The bead populated voided film may have one embodiment wherein the beads are substantially mono dispersed in their size and or shape and in another embodiments there is a variety of sizes and or shapes that that are randomly distributed on the film. The embodiment with a variety of sizes provides a surface with minimal contact for the next film (towards the viewer) in the light management film stack. In some film stacks there is a top diffuser that has a beaded surface and a light directing film with a surface structure. For optimal optical performance the light directing film needs an air gap on the light entry side to help redirect back into the film any reflected light that is going opposite from the optimal or intended direction. By providing a beaded surface on a voided diffuser as described in this invention with a variety of sizes, the resulting film stack will provided excellent optics as required by the LCD display. Additionally having a variety of bead sizes allow the polymer binder that is used to hold the beads to the film surface to have good adhesion to prevent the loss of beads during times of surface abrasion or rubbing. By controlling the amount of bead embedment into the polymer binder the surface area of the bead that is surrounded by gas (air) is maximized and the optics of the film stack is further optimized. Other useful embodiments useful in this invention is to provide a voided film with a surface roughness or texture that creates an uneven surface so when a surface of another film is placed on top of the roughen or texture surface, spaces that contain air are formed between the two films. Such roughness or texture may be embossed or extrusion roll molded into the surface. Such a process may be done prior to stretching of said voided film or after it has been stretched.

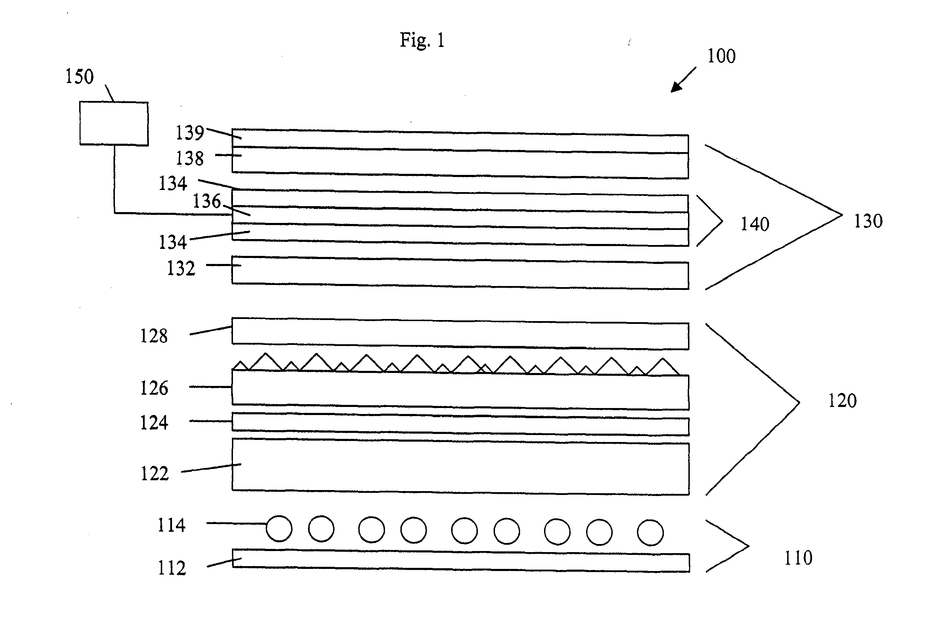

A schematic exploded view of an exemplary embodiment of a direct-lit LC display device **100** is presented in FIG. 1. Such a display device **100** may be used, for example, in an LCD monitor or LCD-TV. The display device **100** is based on the use of a front panel assembly **130,** comprising a LC panel **140,** which typically comprises a layer of LC **136** disposed between panel plates **134.** The plates **134** are often formed of glass, and may include electrode structures and alignment layers on their inner surfaces for controlling the orientation of the liquid crystals in the LC layer 136. The electrode structures are commonly arranged so as to define LC panel pixels, areas of the LC layer where the orientation of the liquid crystals can be controlled independently of adjacent areas. A color filter may also be included with one or more of the plates **134** for imposing color on the image displayed.

An upper absorbing polarizer **138** is positioned above the LC layer **136** and a lower absorbing polarizer **132** is positioned below the LC layer **136.** The absorbing polarizers **138, 132** and the LC panel **140** in combination control the transmission of light from the backlight **110** through the display **100** to the viewer. In some LC displays, the absorbing polarizers **138, 132** may be arranged with their transmission axes perpendicular. When a pixel of the LC layer **136** is not activated, it may not change the polarization of light passing there through. Accordingly, light that passes through the lower absorbing polarizer **132** is absorbed by the upper absorbing polarizer **138,** when the absorbing polarizers **138, 132** are aligned perpendicularly. When the pixel is activated, on the other, hand, the polarization of the light passing there through is rotated, so that at least some of the light that is transmitted through the lower absorbing polarizer **132** is also transmitted through the upper absorbing polarizer **138.** Selective activation of the different pixels of the LC layer **136,** for example by a controller **150,** results in the light passing out of the display at certain desired locations, thus forming an image seen by the viewer. The controller may include, for example, a computer or a television controller that receives and displays television images. One or more optional layers **139** may be provided over the upper absorbing polarizer **138,** for example to provide mechanical and/or environmental protection to the display surface. In one exemplary embodiment, the layer **139** may include a hardcoat over the absorbing polarizer **138.**

It will be appreciated that some type of LC displays may operate in a manner different from that described above. For example, the absorbing polarizers may be aligned parallel and the LC panel may rotate the polarization of the light when in an unactivated state. Regardless, the basic structure of such displays remains similar to that described above.

The backlight **110** includes a number of light sources **114** that generate the light that illuminates the LC panel **120.** The light sources **114** used in a LCD-TV or LCD monitor are often linear, cold cathode, fluorescent tubes that extend across the display device **100.** Other types of light sources may be used, however, such as filament or arc lamps, light emitting diodes (LEDs), flat fluorescent panels or external fluorescent lamps. This list of light sources is not intended to be limiting or exhaustive, but only exemplary.

The backlight **110** may also include a reflector **112** for reflecting light propagating downwards from the light sources **114,** in a direction away from the LC panel **140.** The reflector **112** may also be useful for recycling light within the display device **100,** as is explained below. The reflector **112** may be a specular reflector or may be a diffuse reflector. One example of a specular reflector that may be used as the reflector **112** is Vikuiti® Enhanced Specular Reflection (ESR) film available from 3M Company, St. Paul, Minn. Examples of suitable diffuse reflectors include polymers, such as polyethylene terephthalate (PET), polycarbonate (PC), polypropylene, polystyrene and the like, loaded with diffusely reflective particles, such as titanium dioxide, barium sulphate, calcium carbonate and the like.

An arrangement **120** of light management layers is positioned between the backlight **110** and the front panel assembly **130.** The light management layers affect the light propagating from backlight **110** so as to improve the operation of the display device **100 .** For example, the arrangement **120** of light management layers may include a diffuser plate **122.** The diffuser plate **122** is used to diffuse the light received from the light sources, which results in an increase in the uniformity of the illumination light incident on the LC panel **140.** Consequently, this results in an image perceived by the viewer that is more uniformly bright.

The arrangement **120** of light management layers may also include a reflective polarizer **128.** The light sources **114** typically produce unpolarized light but the lower absorbing polarizer **132** only transmits a single polarization state, and so about half of the light generated by the light sources **114** is not transmitted through to the LC layer **136.** The reflecting polarizer **128,** however, may be used to reflect the light that would otherwise be absorbed in the lower absorbing polarizer, and so this light may be recycled by reflection between the reflecting polarizer **128** and the reflector **112.** At least some of the light reflected by the reflecting polarizer **128** may be depolarized, and subsequently returned to the reflecting polarizer **128** in a polarization state that is transmitted through the reflecting polarizer **128** and the lower absorbing polarizer **132** to the LC layer **136.** In this manner, the reflecting polarizer **128** may be used to increase the fraction of light emitted by the light sources **114** that reaches the LC layer **136,** and so the image produced by the display device **100** is brighter.

Any suitable type of reflective polarizer may be used, for example, multilayer optical film (MOF) reflective polarizers; diffusely reflective polarizing film (DRPF), such as continuous/disperse phase polarizers, wire grid reflective polarizers or cholesteric reflective polarizers.

The arrangement **120** of light management layers may also include a light directing film **126.** A light directing film is one that includes a surface structure that redirects off-axis light in a direction closer to the axis of the display. This increases the amount of light propagating on-axis through the LC layer **136,** thus increasing the brightness of the image seen by the viewer. One example is a prismatic light directing film, which has a number of prismatic ridges that redirect the illumination light, through refraction and reflection.

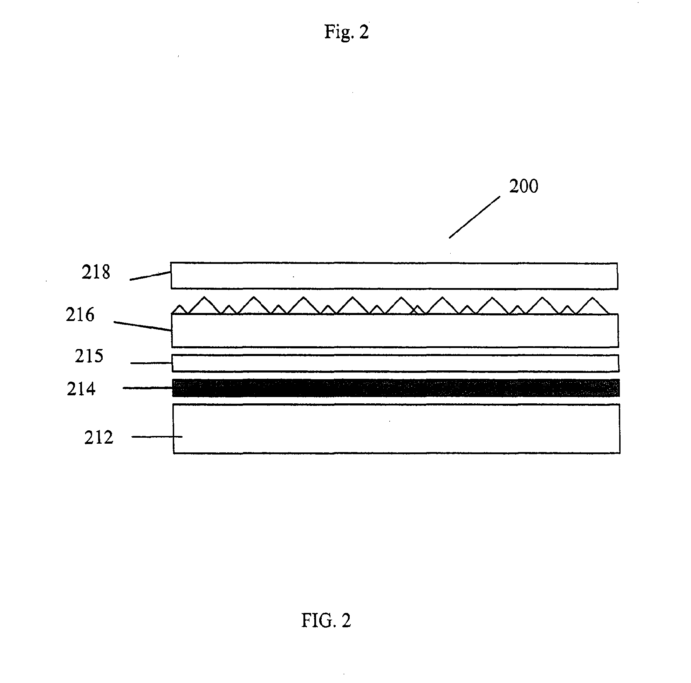

Unlike diffuser plates used in conventional LCD-TVs, the present invention uses an arrangement of light management layers that have separate structural and diffusing members. An optically transmissive self-supporting substrate and an unattached voided polymeric optical diffuser film perform these functions, respectively. One exemplary embodiment of the present invention is schematically illustrated in FIG. 2. The arrangement of light management layers **200** includes an optically transmissive self-supporting substrate **212** and a voided polymeric optical diffuser film **214** adjacent to but un-attached to the substrate. Other optical films can be added to the arrangement of light management layers above the voided polymeric optical diffuser film **214.** These other optical films may include a bead coated light collimation film **215,** a prismatic light directing film **216,** and a reflective polarizer **218.**

The substrate **212** is a sheet of material that, like that of the plate diffuser in conventional back lights, is self-supporting, and is used to provide support to the layers above in the light management arrangement. Self-supporting is thus defined as bending insignificantly(less than 1/180 of its longest dimension) under its own weight even with the additional weight of other layers in the arrangement. The substrate **212** may be, for example, up to a few mm thick, depending on the size of the display. For example, in one exemplary embodiment, a 30" LCD-TV has a 2 mm thick bulk diffuser plate. In another exemplary embodiment, a 40" LCD-TV has a 3 mm thick bulk diffuser plate.

The substrate **212** may be made of any material that is substantially transparent to visible light, for example, organic or inorganic materials, including glasses and polymers. Suitable glasses include float glasses, i.e. glasses made using a float process, or LCD quality glasses, referred as LCD glass, whose characteristic properties, such as thickness and purity, are better controlled than float glass. One approach to forming LCD glass is to form the glass between rollers.

The substrate **212,** the diffuser film **214,** and one or more other light management layers may be included in a light management arrangement disposed between the backlight and the LCD panel. The substrate **212** provides a stable structure for supporting the light management arrangement. The substrate **212** is less prone to warping than conventional diffuser plate systems, particularly if the supporting substrate **212** is formed of a warp-resistant material such as glass.

Suitable polymer materials used to make the substrate **212** may be amorphous or semi-crystalline, and may include homopolymer, copolymer or blends thereof. Example polymer materials include, but are not limited to, amorphous polymers such as poly(carbonate) (PC); poly(styrene) (PS); acrylates, for example acrylic sheets as supplied under the ACRYLITE® brand by Cyro Industries, Rockaway, N.J.; acrylic copolymers such as isooctyl acrylate/acrylic acid; poly (methylmethacrylate) (PMMA); PMMA copolymers; cycloolefins; cylcoolefin copolymers; acrylonitrile butadiene styrene (ABS); styrene acrylonitrile copolymers (SAN); epoxies; poly(vinylcyclohexane); PMMA/poly(vinylfluoride) blends; atactic poly(propylene); poly(phenylene oxide) alloys; styrenic block copolymers; polyimide; polysulfone; poly(vinyl chloride); poly(dimethyl siloxane) (PDMS); polyurethanes; poly(carbonate)/aliphatic PET blends; and semicrystalline polymers such as poly(ethylene); poly(propylene); poly(ethylene terephthalate) (PET); poly(ethylene naphthalate)(PEN); polyamide; ionomers; vinyl acetate/polyethylene copolymers; cellulose acetate; cellulose acetate butyrate; fluoropolymers; poly(styrene)-poly(ethylene) copolymers; and PET and PEN copolymers.

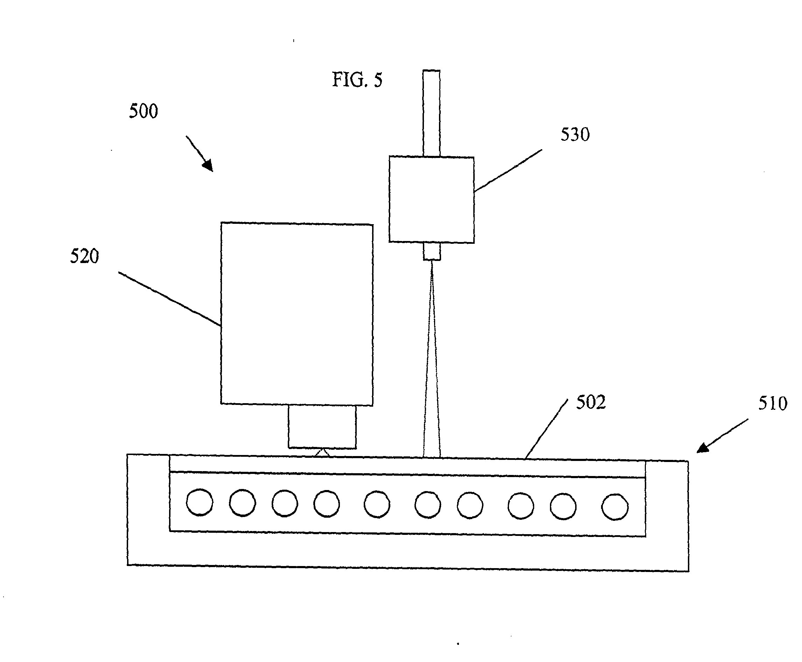

Exemplary embodiments of the voided polymeric optical diffuser film **214** as well as the voided polymeric optical diffuser film with surface diffusion and or collimation properties 314include a semi-crystalline polymer matrix containing voids and void initiating particles. A semi-crystalline polymer matrix is preferred as it may be substantially transparent to visible light, can be readily stretch voided, and can possess dimensional stability having a shrinkage of less than 1.0% after being tested at elevated temperatures up to 85C(this is the condition typically required by films in direct backlit LCD's). Preferable polymers to meet all these criteria are polyesters and their copolymers. Most preferred are poly(ethylene terephthalate) (PET); poly(ethylene naphthalate)(PEN)polyesters and any of their copolymers. PET is most suitable as it is much lower in cost than PEN. FIG. 5 shows the light transmission of several commercially available PET resins. Transmission is measured per method ASTM D-1003. Some grades have a transmission below 90.5%. It is preferred that PET grades with optical transmissions above 90.5% are used to limit the amount of light absorption by the diffuser film. Exemplary embodiments of the voided polymeric optical diffuser film with surface diffusion and or collimation properties may included but are not limited to inorganic, organic and hybrid (containing both inorganic and organic materials) polymeric beads that are adhered to the surface using a polymeric binder. Some of the materials and means for making are incorporated by reference in the following patents. U.S. Patent No. 6906157 covers some of the polymerizations.(standard suspension) means for making polymeric beads while US Pat. No5378577 covers limited coalescence (inorganic particulate stabilizer) and U.S. Pat. No. 5279934 covers latex limited coalescence (organic particulate stabilized).

Several means of providing beads that are useful in this invention are incorporated by reference from U.S. Pat. Nos. 6,906,157; 5378577.

US 6906157 provides a water dispersible polymer particle stabilized by a hydrophobically capped oligomeric acrylamide dispersant or a heterogeneous method for forming polymer particles comprising providing a water immiscible organic phase comprising at least one monomer dispersed in a continuous water phase and a hydrophobically capped oligomeric acrylamide, and polymerizing the organic phase to yield polymer particles stabilized with hydrophobically capped oligomeric acrylamide. Also, a heterogeneous method for forming polymer particles comprising providing a water immiscible organic dispersed in a continuous water phase, polymerizing the organic phase, and adding hydrophobically capped oligomeric acrylamide to yield polymer particles stabilized with hydrophobically capped oligomeric acrylamide. Particles (beads) made by this process provide several advantages over the prior art. First, polymer particles stabilized by hydrophobically capped oligomeric acrylamides show excellent colloidal stability as compared to similar polymer particles stabilized by other common surfactants. The water dispersible polymer beads may be made from a heterogeneous polymerization or by a solvent evaporation or precipitation process performed in the presence of a hydrophobically capped oligomeric acrylamide dispersant. Any hydrophobically capped oligomeric acrylamide dispersant may be used in the invention provided it produces the desired results. In a preferred embodiment of the invention, the hydrophobically capped oligomeric acrylamide dispersant has the formula (I): or the formula (II): or the formula (III): wherein: each $R_1$ and $R_2$ independently represents a linear or branched alkyl, alkenyl or arylalkyl group having from 1 to about 30 carbon atoms, such as octyl, 2-ethylhexyl, decyl, dodecyl, octadecyl, octadecenyl, 3-phenylpropyl, 3-phenyl-2,2-dimethylpropyl etc., with the sum of $R_1$ and $R_2$ comprising from about 8 to about 50 carbon atoms,each $R_3$ independently represents hydrogen or a methyl group, each X independently represents hydrogen or an alkyl group containing up to about 4 carbon atoms, such as methyl, ethyl or isopropyl etc., each Y independently represents hydrogen or an alkyl group containing up to about 4 carbon atoms, such as methyl, ethyl or isopropyl etc., or a hydroxylated or sulfonated alkyl group containing up to about 4 carbon atoms, such as tris(hydroxymethyl) methyl, diethanolammonium-2,2-dimethyl ethyl sulfonate, or 2,2-dimethylethyl sulfonate, wherein the sulfonated alkyl group may contain an associated alkali metal such as sodium, or ammonium or alkylated ammonium counter ion. Preferably, the total number of carbons comprising X and Y will be 0-3 or X or Y will comprise a sulfonate group. Y' represents an alkyl group containing up to about 4 carbon atoms or a hydroxylated or sulfonated alkyl group containing up to about 4 carbon atoms,each Z independently represents oxygen, NH, $NR_1$ or S, m is an integer of from about 2 to about 80,n is an integer of from 0 to about 80, andp is an integer of from about 1 to about 6, preferably from about 1 to 2.

More preferably, the dispersants of the present invention may be represented by the two structures, Structure 1 and Structure 2, below wherein z, the number of repeating units, is between 5 and 90 and $R_4$, $R_5$, and $R_6$ are saturated

or unsaturated, branched or unbranched hydrocarbon chains containing 4 to 30 carbons atoms and q can be 0 or 1. L is an optional linking group which can be-$O_2CCH_2$--or--$NHCOCH2$-. The water dispersible polymer particle stabilized by a hydrophobically capped oligomeric acrylamide dispersant may be made from any polymer via any number of heterogeneous preparative techniques to yield particles of from 0.01 to 100 $\mu$m in median diameter. Some representative classes of polymers useful in this invention include, but are not necessarily limited to polyesters and addition polymers of monomers containing $\alpha,\beta$-ethylenic unsaturation. In preferred embodiments, they may be styrenic, acrylic, or a polyester-addition polymer hybrid. By styrenic it is meant synthesized from vinyl aromatic monomers and their mixtures such as styrene, t-butyl styrene, ethylvinylbenzene, chloromethylstyrene, vinyl toluene, styrene sulfonylchloride and the like. By acrylic is meant synthesized from acrylic monomers and their mixtures such as acrylic acid, or methacrylic acid, and their alkyl esters such as methyl methacrylate, ethyl methacrylate, butyl methacrylate, methyl acrylate, ethyl acrylate, butyl acrylate, hexyl acrylate, n-octyl acrylate, lauryl methacrylate, 2-ethylhexyl methacrylate, nonyl acrylate, benzyl methacrylate, the hydroxyalkyl esters of the same acids, such as, 2-hydroxyethyl acrylate, 2-hydroxyethyl methacrylate, and 2-hydroxypropyl methacrylate and the like. By polyester-addition polymer hybrid it is meant the free radical addition reaction product of a monomer containing $\alpha,\beta$-ethylenic unsaturation (such as a styrenic, acrylic, vinyl ester or vinyl ether) with a polyester macromonomer containing unsaturated units either pendant or along its backbone.

Other useful bead (particles) useful in this invention are disclosed in U.S. Pat No. 5,378,577. The matte beads (particle) in accordance with this invention include a polymeric core material surrounded by a layer of colloidal inorganic particles. Any suitable colloidal inorganic particles can be used to form the particulate layer on the polymeric core, such as, for example, silica, alumina, alumina-silica, tin oxide, titanium dioxide, zinc oxide mixture thereof and the like. Colloidal silica is preferred for several reasons including ease of preparation of the coated polymeric particles and improved adhesion of the matte particles to the photographic element during processing. For the purpose of simplification of the presentation of this invention, throughout the remainder of this specification colloidal silica will be used as the "colloidal inorganic particles" surrounding the polymeric core material, however, it should be understood that any of the colloidal inorganic particles may be employed. Any suitable polymeric material or mixture of polymeric materials capable of being formed into particles having the desired size may be employed in the practice of this invention to prepare matte particles for use in photographic elements, such as, for example, olefin homopolymers and copolymers, such as polyethylene, polypropylene, polyisobutylene, polyisopentylene and the like; polyfluoroolefins such as polytetrafluoroethylene, polyvinylidene fluoride and the like, polyamides, such as, polyhexamethylene adipamide, polyhexamethylene sebacamide and polycaprolactam and the like; acrylic resins, such as polymethylmethacrylate, polyacrylonitrile, polymethylacrylate, polyethylmethacrylate and styrenemethylmethacrylate or ethylene-methyl acrylate copolymers, ethylene-ethyl acrylate copolymers, ethylene-ethyl methacrylate copolymers, polystyrene and copolymers of styrene with unsaturated monomers mentioned below, polyvinyltoluene cellulose derivatives, such as cellulose acetate, cellulose acetate butyrate, cellulose propionate, cellulose acetate propionate, and ethyl cellulose; polyvinyl resins such as polyvinyl chloride, copolymers of vinyl chloride and vinyl acetate and polyvinyl butyral, polyvinyl alcohol, polyvinyl acetal, ethylene-vinyl acetate copolymers ethylene-vinyl alcohol copolymers, and ethylene-allyl copolymers such as ethylene-allyl alcohol copolymers, ethylene-allyl acetone copolymers, ethylene-allyl benzene copolymers ethylene-allyl ether copolymers, ethylene-acrylic copolymers and polyoxy-methylene, polycondensation polymers, such as, polyesters, including polyethylene terephthalate, polybutylene terephthalate, polyurethanes and polycarbonates. In some applications for photographic elements it is desirable to select a polymer or copolymer that has an index of refraction that substantially matches the index of refraction of the material of the layer in which it is coated. Any suitable method of preparing polymeric particles surrounded by a layer of colloidal silica may be used to prepare the matte bead particles for use in accordance with this invention. For example, suitably sized polymeric particles may be passed through a fluidized bed or heated moving or rotating fluidized bed of colloidal silica particles, the temperature of the bed being such to soften the surface of the polymeric particles thereby causing the colloidal silica particles to adhere to the polymer particle surface. Another technique suitable for preparing polymer particles surrounded by a layer of colloidal silica is to spray dry the particles from a solution of the polymeric material in a suitable solvent and then before the polymer particles solidify completely, passing the particles through a zone of colloidal silica wherein the coating of the particles with a layer of the colloidal silica takes place. Another method to coat the polymer particles with a layer of colloidal silica is by Mechano Fusion.

A still further method of preparing the matte particles in accordance with this invention is by limited coalescence. This method includes the "suspension polymerization" technique and the "polymer suspension" technique. In the "suspension polymerization" technique, a polyaddition polymerizable monomer or monomers are added to an aqueous medium containing a particulate suspension of colloidal silica to form a discontinuous (oil droplets) phase in a continuous (water) phase. The mixture is subjected to shearing forces by agitation, homogenization and the like to reduce the size of the droplets. After shearing is stopped an equilibrium is reached with respect to the size of the droplets as a result of the stabilizing action of the colloidal silica stabilizer in coating the surface of the droplets and then polymerization is completed to form an aqueous suspension of polymer particles in an aqueous phase having a uniform layer thereon of colloidal silica. This process is described in U. S. Pat. Nos. 2,932,629 and 4,248,741 incorporated herein by reference.

Suitable polymer materials used as a binders for the coating dispersion may include homopolymer, copolymer or blends thereof. Example polymer materials include, but are not limited to poly(carbonate )(PC); poly(styrene) (PS); acrylates, acrylic copolymers such as isooctyl acrylate/acrylic acid; poly(methylmethacrylate) (PMMA); PMMA copolymers; acrylonitrile butadiene styrene (ABS); styrene acrylonitrile copolymers (SAN); epoxies; poly(vinylcyclohexane); PMMA/poly(vinylfluoride) blends; styrenic block copolymers; polyimide;; poly(dimethyl siloxane) (PDMS); polyurethanes; polyamide; ionomers; vinyl acetate/polyethylene copolymers; cellulose acetate; cellulose acetate butyrate. Binder useful in this invention may be coated from water or solvent based vehicles.

The beads and their coating binder may be applied to the surface of the voided film in a variety of means known in the art. This includes but is not limited to coating a dispersion of the beads by the use of a slot hopper, air-knife, roller, gravure coating, direct or offset roll transfer. The surface of the voided film may be treated prior the application of the beads to improve the wetting of the surface as well as to improve the adhesion of the dried coated dispersion. Such treatment may include but is not limited to atmospheric plasma such as CDT or corona. The plasma may be done in air or other gas such as nitrogen, argon, oxygen and others or a mixture of gases to enhance chemically bonding site that are better suited to the binder of the bead containing coating dispersion. Other means to improve the adhesion and wetting of the coating dispersion may also include the application of a primer or sub layer. The primers typically are very thin layer and some may be applied to the voided web prior to the formation of the voids that occur during stretching or orientation of the film.

The coating dispersion may also contain addenda such as surfactants for improved wetting between the film and the liquid coating. Such materials are also useful in preventing coating repellencies and other dynamic defects that occur during a coating process.

The void initiating particles may be any type of particle that is incompatible with the matrix polymer. These particles can be inorganic or organic. Inorganic particles can include any of calcium carbonate, barium sulfate, titanium dioxide, or any other inorganic compound that can be melt blended into a polymer. Typical organic void initiating particles are polymers that are immiscible with the matrix polymer. These are preferred as resin pellets of these immiscible polymers can be simply dry blended with the resin pellets of the matrix polymer and extruded together to form a cast film. Inorganic particles require a pre-mixing or melt compounding, which adds processing cost. Preferred organic void initiating particles are polyolefins. Most preferred is polypropylene. The void initiating particles should be added so as to produce enough diffusivity to function as a diffuser yet not be so opaque that the optical luminance of the LCD display is significantly reduced. Preferred loadings of the void initiating particles are 3 to 25 wt % of the entire film. The most preferred loadings are 10 to 20 wt%.

The voided polymeric optical diffuser 214 is preferably produced by a process of dry blending the matrix polymer and an immiscible polymer additive. Blending may be accomplished by mixing finely divided, e.g. powdered or granular, matrix polymer and polymeric additive and, thoroughly mixing them together, e.g. by tumbling them. The resulting mixture is then fed to the film forming extruder. Blended matrix polymer and immiscible polymeric additive which has been extruded and, e.g. reduced to a granulated form, can be successfully re-extruded into a voided polymeric optical diffuser. It is thus possible to re-feed scrap film, e.g. as edge trimmings, through the process. Alternatively, blending may be effected by combining melt streams of matrix polymer and the immiscible polymer additive just prior to extrusion. If the polymeric additive is added to the polymerization vessel in which the matrix polymer is produced, it has been found that voiding and hence diffusivity is not developed during stretching. This is thought to be on account of some form of chemical or physical bonding which may arise between the additive and matrix polymer during thermal processing.

The extrusion, quenching and stretching of the voided polymeric optical diffuser film may be effected by any process which is known in the art for producing oriented film, e.g. by a flat film process or a bubble or tubular process. The flat film process is preferred for making voided polymeric optical diffuser according to this invention and involves extruding the blend through a slit die and rapidly quenching the extruded web upon a chilled casting drum so that the matrix polymer component of the film is quenched into the amorphous state. The film base is then biaxially oriented by stretching in mutually perpendicular directions at a temperature above the glass-rubber transition temperature of the matrix polymer. Generally the film is stretched in one direction first and then in the second direction although stretching may be effected in both directions simultaneously if desired. In a typical process the film is stretched firstly in the direction of extrusion over a set of rotating rollers or between two pairs of nip rollers and is then stretched in the direction transverse thereto by means of a tenter apparatus. The film may be stretched in each direction to 2.5 to 5.0 times its original dimension in each direction of stretching. Upon stretching voids initiate around the void initiating particles. The higher the concentration of void initiating particle the higher the degree of void volume that is produced. The final stretched thickness of the film is preferably in the 1.0 to 10.0 mil thickness range. The most preferred thickness range is between 2.0 and 6.0 mils. This is significantly thinner than the optically transmissive self-supporting substrate and together their total thickness can be maintained in the range of that of the currently used plate diffusers.

After the film has been stretched and a voided polymeric optical diffuser film formed, it is heat set by heating to a temperature sufficient to crystallize the matrix polymer whilst restraining the voided polymeric optical diffuser against retraction in both directions of stretching. This process enables the film to meet shrinkage requirements of less than 1.0% when tested at temperatures up to 80C. The voiding tends to collapse as the heat setting temperature is increased and the degree of collapse increases as the temperature increases. Hence specular light transmission increases with an increase in heat setting temperatures. Whilst heat setting temperatures up to about 230 C can be used without destroying the voids, temperatures between 150 C and 200 C generally result in a greater degree of voiding and more efficient duffusivity, as well as result in low shrinkage after thermal testing.

The voided polymeric optical diffuser film **214** may also include a whitener. Typically whiteners are added at levels much lower than void initiators and thus do not contribute to voiding but do improve whiteness and to some extent diffusivity of the film. Whiteners are typically inorganic compounds, $TiO_2$ being most preferred. These optical brighteners can be added to the film during the resin blending process and can be added via master batch pellets at the appropriate ratio. The appropriate ratio is that that would let down the concentration of the master batch pellet with the rest of the matrix resin and void initiating resin to a concentration preferably between 0.25 and 5.0 wt%.

The voided polymeric optical diffuser film 214 may also include optical brighteners that convert UV light into visible light. Such optical brighteners must be chosen from those which are thermally stable and can survive the extrusion temperatures used to fabricate the voided polymeric optical diffuser film. Preferred optical brighteners comprise benzoxazolyll-stilbene compounds. The most preferred optical brightener comprises 2,2'-(1,2-ethenediyldi-4,1-phenylene) bisbenzoxazole. These optical brighteners can be added to the film during the resin blending process and can be added via master batch pellets at the appropriate ratio. The appropriate ratio is that that would let down the concentration of the master batch pellet with the rest of the matrix resin and void initiating resin to a concentration preferably between 0.01 and 0.1 wt%. In the most preferred embodiment the optical brightener will be added to attain a concentration between 0.02 and 0.05%wt.

The voided polymeric optical diffuser film 214 may also include an antistatic coating to prevent dirt attraction. Anyone of the known antistatic coatings could be employed.

The voided polymeric optical diffuser film 214 may also be fabricated as a multilayered or coextruded film. Advantages of doing so would be to enable the use of a very thin film yet still meet both optical and thermal stability or shrinkage requirements. Thin films require high loadings of void initiator and thus high voiding to achieve the optical diffusion performance of a plate diffuser. At these high levels of voiding the film is much less dimensionally stable at elevated temperatures. By creating a film with a non-voided layer adjacent to one or both sides of a voided layer the dimensional stability at elevated temperatures can be improved. Such multilayered films are produced the same as previously discussed except a second extruder is used to melt and pump neat matrix polymer. This neat polymer extrusion flow is delivered along with the voided layer extrusion flow, previously described, into a co-extrusion die assembly. A multilayered cast film is then produced with a layer of neat polymer on one or both sides of the voided layer. This cast film is then quenched and stretched as previously discussed.

The optically transmissive self-supporting substrate **212** or the optical diffuser film **214** may be provided with protection from ultraviolet (UV) light, for example by including UV absorbing material or material in one of the layers that is resistant to the effects of UV light. Suitable UV absorbing compounds are available commercially, including, e.g., Cyasorb® UV-1164, available from Cytec Technology Corporation of Wilmington, Del., and Tinuvin® 1577, available from Ciba Specialty Chemicals of Tarrytown, N.Y.

Other materials may be included in the optically transmissive self-supporting substrate 212 or the optical diffuser film 214 to reduce the adverse effects of UV light. One example of such a material is a hindered amine light stabilizing composition (HALS). Generally, the most useful HALS are those derived from a tetramethyl piperidine, and those that can be considered polymeric tertiary amines. Suitable HALS compositions are available commercially, for example, under the "Tinuvin" tradename from Ciba Specialty Chemicals Corporation of Tarrytown, N.Y. One such useful HALS composition is Tinuvin 622.

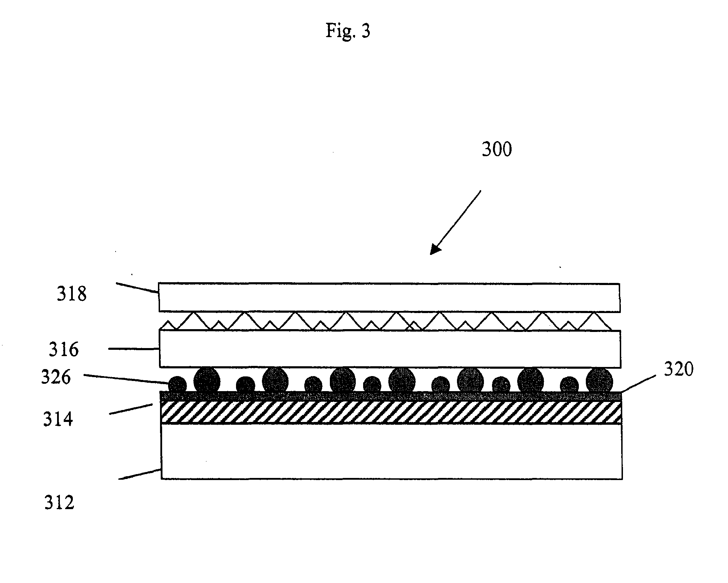

Another exemplary embodiment of the present invention is schematically illustrated in FIG. 3. The arrangement of light management layers 300 includes an optically transmissive self-supporting substrate 312 and a voided polymeric optical diffuser film 314 adjacent to but un-attached to the substrate. Other optical films can be added to the arrangement of light management layers above the voided polymeric optical diffuser film 314. These other optical films may include a, a prismatic light directing film 316, and a reflective polarizer 318.

The voided polymeric optical diffuser film 314 of this arrangement has been fully described previously as that of the voided polymeric optical diffuser film 214 of FIG. 2 in the prior arrangement. The voided polymeric optical diffuser film 314, however, further comprises an adhesive layer 320 and transparent microbeds **326** that are partly embedded into adhesive layer 326. The function of the partly embedded microbeads on this surface of the voided polymeric optical diffuser film 314 is to direct light rays which transmit through the film into a more normal direction to the film surface. Such layers can further control the direction of light transmitting through the voided polymeric optical diffuser film.

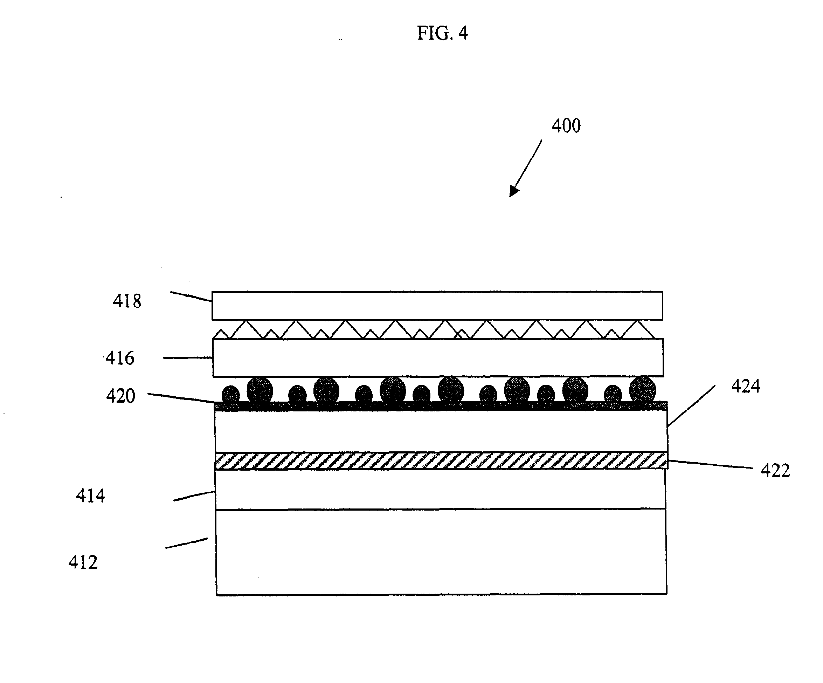

In another embodiment of this invention Fig. 4 provides an optically transmissive self-supporting substrate 412 with a voided polymeric diffuser 414. Transparent support 424 on which there is a thin adhesive layer 420 with beads 426 that are partly embedded into adhesive layer is laminated with adhesive layer 422. By having beads that are only partly embedded in the adhesive layer, light is pre-collimated as it exits layer the beads. Light that encounters the air interface is scattered and will recycle back through the layer below in to the voided diffuser and it will then be redirected back up towards the beads thus having an additional opportunity to be collimated by the beads.

**EXAMPLES**

Samples of voided polymeric optical diffuser films were prepared and coated with a dispersion of polymeric binder and beads and their performance in combination with an optically transmissive self-supporting substrate was compared to A sample of voided polymeric optical diffuser film.

Sample EX 1 (control) Voided diffuser without beads

PET(#7352 from Eastman Chemicals) was dry blended with Polypropylene("PP", Huntsman P4G2Z-159) at 5% by weight and with a 1 part PET to 1 part TiO2 concentrate (PET 9663 E0002 from Eastman Chemicals) at 0.5% by weight. This blend was then dried in a desicant dryer at 65 C for 12 hours.

Cast sheets were extruded using a 2-1/2" extruder to extrude the PET/PP/TiO2 blend. The 275C meltstream was fed into a 7 inch film extrusion die also heated at 275 C. As the extruded sheet emerged from the die, it was cast onto a quenching roll set at 55C. The PP in the PET matrix dispersed into globules between 10 and 30 um in size during extrusion. The final dimensions of the continuous cast sheet were 18 cm wide and 1140 um thick. The cast sheet was then stretched at 110 C first 3.2 times in the X-direction and then 3.4 times in the Y-direction. The stretched sheet was then Heat Set at 150 C.

During stretching voids were initiated around the particles of PP that were dispersed in the cast sheet. These voids grew during stretching and resulted in significant void volume. The resulting the thickness was 140 um. This film was evaluated optically as an unattached diffuser film in combination with a 2 mm thick plate of float glass.

Sample EX 2 (Inventive) Voided diffuser with beads

A sheet of voided polyester has described in example one was coated with an aqueous dispersion with polymeric beads and its optical and mechanical performance was compared against the control

Dispersion:

A one kilogram dispersion was prepared as follows: 933.5 grams of water, 40.1 grams of Polyvinylpyrrolidone and 26.3 of the dispersion containing Polyvinylpyrrolidone and matte beads ( approximately 10% by weight) is added together, along with a small amount of surfactant to aid in the coating process. The dispersion was mixed to assure good dispersion quality of the mixture. The beads in this example are polymeric matte particles comprising a polymeric core surrounded by a layer of colloidal inorganic particles. The Polyvinylpyrrolidone is 10,000 MW and it was obtained from Sigma-Aldrich. This total dispersion is kept at room temperature and allowed to stir for approximately one hour prior to coating.

The Polyvinylpyrrolidone, water, and matte bead dispersion is slot die coated onto the microvoided support at a wet coverage of 38.1 cm$^3$/m$^2$ and then dried.

The measurements of brightness comprised an on-axis luminance measurement and an on-axis luminance gain calculation. These measurements along with optical uniformity, for examples EX1-EX5 and control samples C1-C5 were performed on a specially designed LCD-TV experimental test bed. The test bed apparatus 500, illustrated schematically in FIG. 5 used a commercial backlight unit 510 to mount and illuminate the samples. Either a diffuser plate **502,** or a combination of an optically transmissive self-supporting substrate and a voided polymeric optical diffuser film **502** was placed in the backlight. The samples were then measured optically using either of two measuring devices 520 and **530.** A description of the back light unit and the measuring equipment follows:

**Back Light Unit:**

Aquos 20" DBL TV by Sharp Electronics Corporation (**510** in Figure 5). 10 CCFL's
With Diffuser Plate (**502** in Figure 5) of thickness, 2mm.
(A 2mm piece of glass was used in place of the Plate Diffuser as the optically transmissive self-supporting substrate when measuring unattached diffuser films, which were placed over the glass, **502** in Figure 5.)

**Measuring Equipment:**

1.) ELDIM 160R EZ Contrast conscope - 2mm spot size with a 1.2 mm distance from sample.(**520** in Figure 5)
2.) TopCon BM7 colorimeter - 1 deg cone, 5mm spot size, 0.5 meter distance from sample.(**530** in Figure 5)

The ELDIM 160R EZ Contrast conscope was used to determine the on-axis luminance emitting from the diffuser plate or from the optically transmissive self-supporting substrate in combination with an unattached diffuser film. On-axis luminance is the intensity of light emitting normal to the diffuser plate or diffuser film surface. Data was reported as the luminance in candela per square meter(cd/m$^2$). The on-axis luminance value for all samples was divided by the on-axis luminance value for the 2mm thick native diffuser plate for the backlight to determine an on-axis luminance gain value.

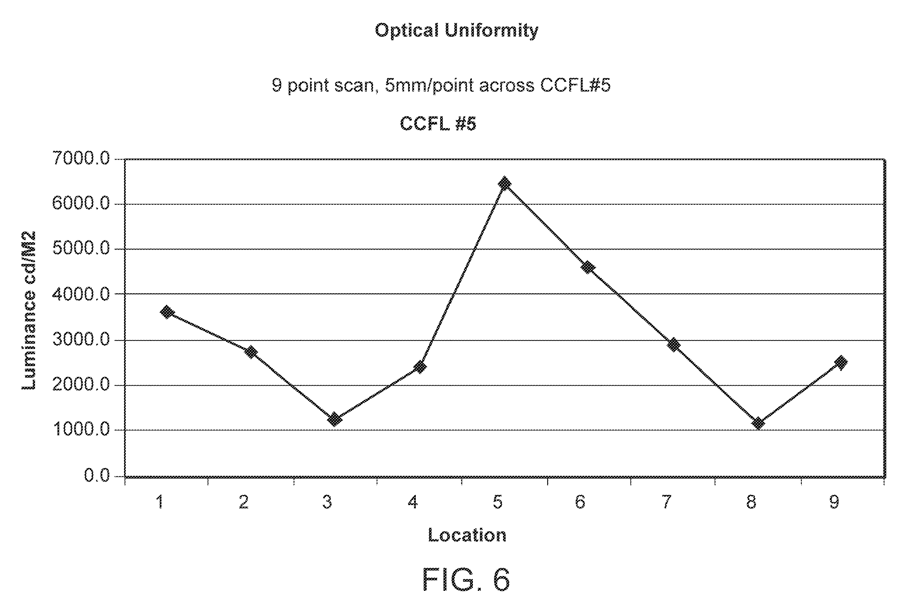

The TopCon BM7 colorimeter was used to measure optical uniformity for all samples. The 5 mm spot size of the instrument was centered over the # 5 of ten CCFL's(spaced nominally 30 mm apart) in the backlight unit to measure luminance. This same measurement was made at 5 mm intervals in 4 different locations either side of the location directly above CCFL # 5, resulting in 9 different measurements nominally centered on CCFL #5. FIG. 6 shows results of these measurements over the CCFL's with no diffuser plate or diffuser film. The peak luminance directly over CCFL #5 is obviously a maximum whereas luminance minimums occur at the approximate locations halfway between CCFL #5 and CCFL #4 on one side and CCFL #6 on the other side. These minimums are approximately at locations 3 and 8 in FIG. 6, respectively. Optical Uniformity is determined by calculating the ratio of the smallest minimum value of luminance in this measurement by the maximum value of luminance made directly over CCFL #5.

Shrinkage testing was done to all diffuser film samples that were configured in an unattached mode to the float glass self-supporting substrate. Thermal shrinkage measurements were performed using samples with dimensions of approximately 35 mm wide by minimum of approximately 6 inches long. Each strip is placed in a punch to obtain a preset 6-inch gauge length. The actual gauge length is measured using a device calibrated with a 6-inch invar bar preset to measure 6-inch samples. This length is recorded to 0.0001 inches using a digital micrometer. Once the initial length is determined, samples are placed in an oven at the prescribed temperature for the necessary time interval (in this case test condition 85 degrees C for 24 hours). Samples are then removed from the oven and placed in a controlled environment set to 23 degrees C and 50 % relative humidity for a minimum of approximately 2 hours but generally approximately 24 hours. The final sample length is re-measured using the same setup used to determine the initial length. The shrinkage is reported in percent using the following equation:

$$\text{Percent Linear Change} = \frac{(\text{final value} - \text{initial value})}{\text{initial value}} \; X \; 100$$

It is noted that the negative (-) sign associated with the shrinkage denotes direction of the size change.

The thickness, optical properties, and shrinkage test results of each of the experimental samples and the control samples are summarized in Table I below. In Table I, each row presents the data for a single sample and thickness of only the diffuser film is shown where both an optically transmissive self supporting substrate and a diffuser film are used in combination for the sample.

**TABLE 1**

| Sample | Thickness (mils / μm) | On-axis Luminance (cd/m$^2$) | On-axis Luminance Gain | Optical Uniformity | Shrinkage (%) |
|---|---|---|---|---|---|
| Control | 5.5 / 140 | 3000 | 1 | 0.921 | - 0.45 |
| Ex 1 | 5.6/142 | 3200 | 1.067 | 0.954 | - 0.45 |

The data in Table 1 shows that the diffuser films of the present invention EX-2 (microvoided diffuser with beads) has better luminance properties than the control sample (no beads on a microvoided diffuser). The data show that the inventive sample has about a 7% improvement in the on-axis luminance over the control sample. The data also shows that the foamed or voided films with and without beads had similar shrinkage properties.

The invention has been described in detail with particular reference to certain preferred embodiments thereof, but it will be understood that variations and modifications can be effected within the spirit and scope of the invention. The patents and other publications referred to in this description are incorporated herein by reference in their entirety.

**Claims**

1.  A voided semi-crystalline polymeric integrated optical diffuser film with surface beads.

2.  The integrated optical diffuser film with surface beads of claim 1 comprising an optical brightener.

3.  The integrated optical diffuser film with surface beads of claim 1 comprising polyester as the voided polymer.

4.  The integrated optical diffuser film with surface beads of claim 3 wherein the polyester comprises polyethylene terephthalate, polyethylene naphthalate, polylactic acid, or any of their copolymers.

5.  The integrated optical diffuser film with surface beads of claim 3 wherein the polyester comprises a polyethylene terephthalate polymer or co-copolymer with a light transmission value greater than 90.5%.

6.  The integrated optical diffuser film with surface beads of claim 4 comprising polyolefin particles as a void initiator.

7.  The integrated optical diffuser film with surface beads of claim 6 wherein said polyolefin comprises polypropylene.

8.  The integrated optical diffuser film with surface beads of claim 6 wherein said polyolefin is present in an amount between 3% and 25% by weight.

9.  The integrated optical diffuser film with surface beads of Claim 1 wherein said surface beads have a light transmission of greater than 70%.

10. The integrated optical diffuser film with surface beads of Claim 1 wherein said surface beads have a size range of between 1,000 and 50,000 nm.

Fig. 1

EP 1 995 627 A1

Fig. 2

200

218

216

215

214

212

FIG. 2

EP 1 995 627 A1

Fig. 3

300

318

316

326

314

312

320

FIG. 4

400

418

416

420

424

422

414

412

EP 1 995 627 A1

FIG. 5

## Optical Uniformity

### 9 point scan, 5mm/point across CCFL#5

**CCFL #5**

FIG. 6

EP 1 995 627 A1

**European Patent Office**

**EUROPEAN SEARCH REPORT**

Application Number

EP 08 15 6653

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2002 098810 A (KEIWA INC) 5 April 2002 (2002-04-05) * figure 4 * * paragraphs [0023], [0038], [0043] - [0046] * | 1-5,9,10 | INV. G02F1/13357 G02B5/02 ADD. |
| Y | | 6-8 | G02F1/1335 |
| Y | EP 0 994 385 A (EASTMAN KODAK CO [US]) 19 April 2000 (2000-04-19) * paragraph [0022] * * paragraphs [0035], [0036] * | 6-8 | |
| A | US 2006/209404 A1 (KIM SANG P [KR] ET AL) 21 September 2006 (2006-09-21) * figure 1 * * paragraphs [0023] - [0033], [0043] * * table 3 * | 1-10 | |
| A | WO 2007/002341 A (3M INNOVATIVE PROPERTIES CO [US]) 4 January 2007 (2007-01-04) * page 10, line 16 - page 11, line 3 * * page 21, line 10 - page 22, line 2 * | | TECHNICAL FIELDS SEARCHED (IPC) G02F G02B |
| A | US 2007/019131 A1 (CHOI JIN-SUNG [KR] ET AL) 25 January 2007 (2007-01-25) * paragraphs [0088], [0089]; figures 7,8 * | 1-10 | |
| A | EP 1 431 055 A (EASTMAN KODAK CO [US]) 23 June 2004 (2004-06-23) * paragraphs [0051] - [0055], [0078] * | 6-8 | |
| E | EP 1 956 403 A (ROHM AND HAAS DENMARK FINANCE [DK]) 13 August 2008 (2008-08-13) * the whole document * | 1-10 | |

The present search report has been drawn up for all claims

| Place of search | Date of completion of the search | Examiner |
|---|---|---|
| Munich | 9 September 2008 | Girardin, François |

EPO FORM 1503 03.82 (P04C01)

**EP 1 995 627 A1**

## ANNEX TO THE EUROPEAN SEARCH REPORT
## ON EUROPEAN PATENT APPLICATION NO.

EP 08 15 6653

This annex lists the patent family members relating to the patent documents cited in the above-mentioned European search report.
The members are as contained in the European Patent Office EDP file on
The European Patent Office is in no way liable for these particulars which are merely given for the purpose of information.

09-09-2008

| Patent document cited in search report | | | Publication date | Patent family member(s) | | | Publication date |
|---|---|---|---|---|---|---|---|
| JP 2002098810 | A | | 05-04-2002 | NONE | | | |
| EP 0994385 | A | | 19-04-2000 | CN | 1248726 | A | 29-03-2000 |
| | | | | DE | 69904009 | D1 | 02-01-2003 |
| | | | | DE | 69904009 | T2 | 24-07-2003 |
| | | | | JP | 2000098541 | A | 07-04-2000 |
| | | | | US | 6030756 | A | 29-02-2000 |
| US 2006209404 | A1 | | 21-09-2006 | CN | 1834756 | A | 20-09-2006 |
| | | | | JP | 2006259736 | A | 28-09-2006 |
| | | | | KR | 20060100974 | A | 22-09-2006 |
| | | | | TW | 289687 | B | 11-11-2007 |
| WO 2007002341 | A | | 04-01-2007 | CN | 101203799 | A | 18-06-2008 |
| | | | | KR | 20080023697 | A | 14-03-2008 |
| | | | | US | 2006290842 | A1 | 28-12-2006 |
| US 2007019131 | A1 | | 25-01-2007 | CN | 1904691 | A | 31-01-2007 |
| | | | | JP | 2007034287 | A | 08-02-2007 |
| | | | | KR | 20070012888 | A | 30-01-2007 |
| EP 1431055 | A | | 23-06-2004 | CN | 1509896 | A | 07-07-2004 |
| | | | | JP | 2004203043 | A | 22-07-2004 |
| | | | | US | 2004121910 | A1 | 24-06-2004 |
| EP 1956403 | A | | 13-08-2008 | US | 2008193731 | A1 | 14-08-2008 |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060082699 A
- US 6906157 B
- US 5378577 A
- US 5279934 A
- US 5378577 B
- US 2932629 A
- US 4248741 A